# NEW EUROPEAN PATENT SPECIFICATION

(11) **EP 1 225 090 B3**
(45) Date of publication of this specification: **22.01.2014**
(45) Mention of the grant of the patent: 02.03.2011
(21) Application number: 02250393.2
(22) Date of filing: 21.01.2002
(51) Int. Cl.: B60P 3/36, B62D 59/04

(54) **Apparatus for moving vehicles such as caravans and trailers**
Vorrichtung zum Bewegen von Fahrzeugen wie Anhänger und Wohnwagen
Dispositif pour déplacer des véhicules tels que remorques et caravanes

(30) Priority: 19.01.2001 GB 0101356
(43) Date of publication of application: 24.07.2002
(73) Proprietor: Truma Gerätetechnik GmbH & Co. KG, 85640 Putzbrunn (DE)
(72) Inventor: Wright, Alan Thomas, Codsall Wood, Wolverhampton, WV8 1RQ (GB); Bryer, Keith Nigel, Pelsall, Walsall WS3 4EX (GB)
(74) Representative: Sties, Jochen

(56) References cited:
- EP-A- 0 827 898

## Description

This invention relates to non-motorised wheeled vehicles such as, for example, caravans and trailers which are designed to be moved by towing vehicles, and is particularly concerned with an apparatus for moving or manoeuvring such a vehicle when not coupled to a towing vehicle.

It is not always possible to move such non-motorised vehicles, hereinafterreferredto generally as "trailers", by means of a towing vehicle, particularly in confined spaces, and moving such trailers manually can be extremely laborious and difficult especially on uneven or inclined surfaces.

Various forms of apparatus are known for moving or manoeuvring trailers when disconnected from towing vehicles. Such apparatus, hereinafter referred to as "apparatus of the form specified", generally comprises a pair of drive units which are mounted or mountable on a trailer having at least one offside wheel and one nearside wheel and which are drivingly connected or connectible to the respective wheels, the drive units being reversible and operable in different modes so as to be capable of moving the trailer forwards or backwards when operated to turn the wheels in the same direction and of turning the trailer when operated to turn the wheels in opposite directions (for a smaller turning circle) orto turn only one or the other of the said wheels (for a larger turning circle).

In one particular kind of apparatus of the form specified, hereinafter referred to as "apparatus of the kind specified", the drive units comprise initially separate units which are adapted to be fitted to a trailer and which incorporate individual drive motors having friction rollers movable into and out of driving contact with the wheels. An example of such apparatus is the apparatus described and illustrated in the applicants' European Patent Application EP 0 827 898 A1.

Trailers which are particularly long or/and heavy are provided with two pairs of offside and nearside wheels which are usually mounted on twin axles. Such trailers can be extremely difficult to manoeuvre by hand when not coupled to a towing vehicle because when the trailer is being turned by maintaining the wheels at one side stationary and causing the wheels at the other side to rotate so that the trailer in effect pivots about the stationary wheels, one or both of the stationary wheels is or are subjected to sideways movement which is resisted by the frictional contact of the wheels with the ground, and such resistance can only be overcome by the tyres scrubbing (which is a form of skidding action).

The object of the present invention is to provide an apparatus of the form specified which makes it easier to manoeuvre trailers with two pairs of wheels.

According to the invention an apparatus with the features of claim 1 is provided.

The control system is operable to cause any selected one of the drive units to operate in steps interrupted by periods of braking of said drive unit. In this case each period of braking is preferably followed by a period of no operation of the drive unit The periods of no operation or/and braking of each drive unit and the periods during which the unit is operated to impart drive to the associated wheel mayvary in duration. In this event the driving and braking periods are preferably shorter than the period of no operation. In a preferred embodiment, when a drive unit is operational drive is applied to the associated wheel for periods each of 40 milliseconds, the drive unit is braked for periods each of 200 milliseconds and each period of non-operation is one second.

In use, the effect of this form of operation of a drive unit is to jog the wheel which it drives, and also the adjacent wheel if the apparatus is fitted to a trailer having two pairs of offside and nearside wheels, so that the or each wheel performs its turning movement as a series of small incremental movements. This reduces the tendency of the wheels to scrub and therefore causes the trailer to turn more easily.

In the event that the selected drive unit is operable in increments of different speeds, the increments of a higher speed may vary in duration compared with the increments of a lower speed. In this event the increments of higher speed are preferably longer In duration than the increments of slower speed.

The control system may be operable to cause the drive units to operate at different speeds. In this event the control system preferably causes the selected drive unit to turn its associated wheel more slowly than the wheel or wheels at the other side of the trailer.

The drive units are preferably provided with electric motors, the control system being adapted to control the supply of electricity to the motors. In this event the control system may be adapted to cause braking of each drive unit electro-magnetically by short circuiting the drive motor or by placing a load resistor in circuit with the motor or by applying a reverse voltage to the motor, or mechanically using an automatically engageable mechanical brake.

The control system may be adapted to cause the drive units to operate in increments of different speeds by supplying to the motors electrical pulses of different durations which effectively change the average voltage of the electrical current applied to the motors. Alternatively, the electrical pulses may be interrupted by periods when the electrical supply is disconnected from the motors and the motors are short circuited which has the effect of braking the wheels.

Preferably an apparatus embodying the invention is an apparatus of the kind specified.

When fitted to a trailer having two pairs of offside and nearside wheels, the apparatus may have two drive units associated respectively with either the front wheels or the rear wheels. Alternatively the apparatus may have four drive units, one for each wheel, and in this event the control system is preferably arranged to operate the two drive units at each side of the trailer in synchronism.

The invention will now be described, by way of example, with reference to the accompanying drawings, in which:-
FIGURE 1 shows a conventional twin-axle caravan to which an apparatus according to the invention may be fitted,
FIGURE 2 shows one form of apparatus according to the invention,
FIGURE 3 is a diagrammatic view from above of the underneath of the caravan illustrated in FIGURE 1 showing the apparatus of FIGURE 2 fitted to it,
FIGURE 4 is a schematic drawing of part of a control system for the apparatus of FIGURE 2, and
FIGURE 5 shows a modification of the control system.

The caravan shown in the drawings comprises a body B having a chassis supported by two pairs of wheels, W1,W2 and W3,W4. These pairs of wheels are mounted forturning, respectively, on two spaced, parallel axles A1,A2 mounted beneath the body centrally between the front and rear ends of the body. The body is provided at the front end with a towing connection T.

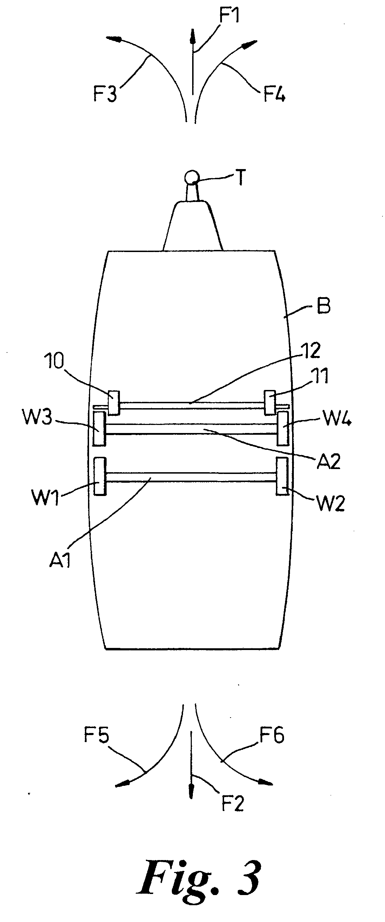

The apparatus comprises a pair of drive units 10,11 which are supported by a crossbar 12 secured to the chassis of the caravan (FIGURE 3) beneath the body B forwardly of the twin axles A1,A2.

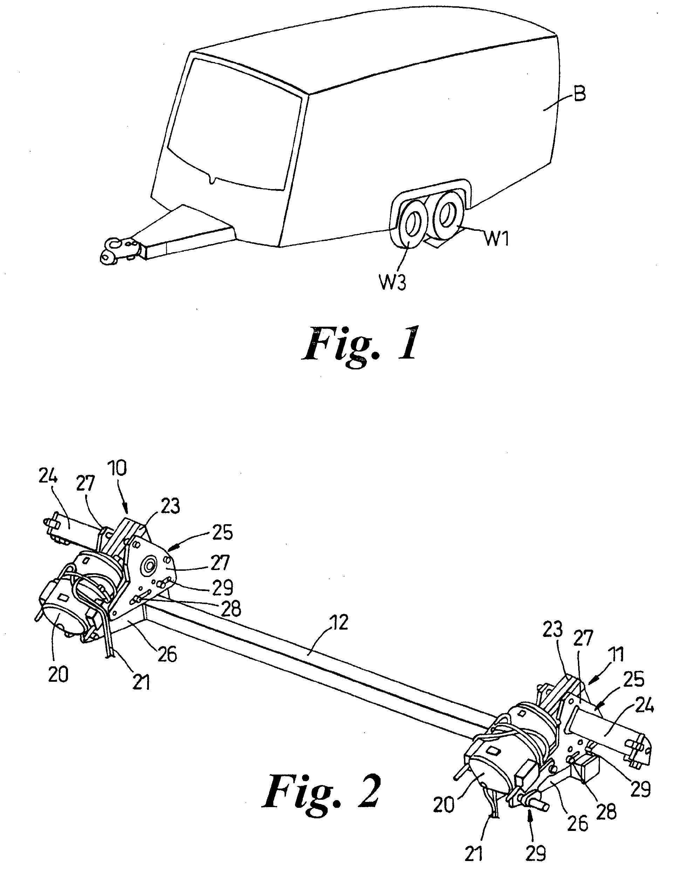

As shown in FIGURE 2, each drive unit 10,11 includes a DC electric motor 20 connected by wiring 21 to an electrical control system. Each motor is arranged to drive a friction drive roller 22 (FIGURE 3) through a reduction gear box 23, each roller being supported and partially enclosed by a shield 24. Each motor 20 with its gear box 23 and drive roller 22 is supported by a carrier 25 which is mounted for sliding movement in a horizontal direction perpendicular to the crossbar 12 on a support 26 fixed to the crossbar. Each carrier comprises two spaced parallel plates 27 straddling the associated support 26 and is guided in its sliding movement by bolts 28 secured to the support and extending through slots 29 in the plates 27.

The apparatus is mounted on the caravan so that the friction rollers 22 of the two drive units 10,11 can be moved into and out of contact with the tyres of front wheels W3 and W4 respectively, such movement being generally in a radial direction with respect to the wheels. This movement is effected by two bistable mechanisms comprising overcentre toggle mechanisms associated with the respective drive units, only one of the mechanisms being visible at 29 in FIGURE 2. Each toggle mechanism comprises two links pivotally connected together at their one ends and pivotally connected at their other ends, respectively, to the carrier 25 and the support 26. Each carrier is biased away from the associated caravan wheel by a spring (not shown). Each toggle mechanism is movable by means of a tool through an overcentre position between a driving position in which it presses the associated friction roller 22 against the adjacent tyre, and an out-of-use position in which the roller is out of contact with the tyre and retained in this position by the spring.

In the driving positions operation of the electric motors causes the rollers 22 through their frictional contact with the tyres to turn the wheels W3,W4. The motors are reversible so that each wheel can be turned clockwise and anti-clockwise.

Electrical current for the motors 20 is obtained from the electricity supply for the caravan, for example a battery, or any other appropriate DC supply and the control system is adapted to control and modify the supply of power to the motors to provide the following functions for manoeuvring of the caravan. The control system is operated by a hand-held controller comprising a transmitter arranged to transmit radio control signals to a receiver incorporated in the control system on the caravan. In addition there may be a hard wire connection between the controller and the control system.

The functions referred to are:-
1. Forwards movement as represented by arrow F1 in FIGURE 3. Both motors are operated simultaneously and at the same speed so that the friction wheels cause the wheel W3 to turn anti-clockwise (as viewed from the side of the caravan) and the wheel W4 to turn clockwise.
2. Rearwards movement as represented by arrow F2 in FIGURE 3. Both motors are operated simultaneously at the same speed but in opposite directions compared with function F1.
3. Forwards turning movement to the left as represented by arrow F3. In this case the two motors turn in opposite directions as in function F1 but the motor of drive unit 10 operates more slowly than the motor of drive unit 11. Also the electrical current supplied to the motor of drive unit 10 is pulsed so that its rotational movement comprises a series of short increments at the normal speed interrupted by a series of short increments of rapid deceleration caused by braking of the motor of the drive unit, such braking being achieved by cutting off the supply of electricity to the motor and short circuiting it and being followed by a period during which the drive unit is out of operation. The wheel W3 therefore turns more slowly than the wheel W4 which causes the caravan to turn left as it moves forwards, and in increments of alternate driving and braking actions so that the wheel is jogged thereby allowing any distortion created in the tyre during each braking action to dissipate during the next driving action.
4. Forwards turning movement to the right as represented by arrow F4. The motors are operated in the same way as in function F3 but with the motor of drive unit W4 turning more slowly than the motor of drive unit W3 and intermittently braking with periods of no operation.
5. Rearwards turning movement to the left as represented by arrow F5. The motors are operated as in function F3 but in opposite directions.
6. Rearwards turning movement to the right as represented by arrow F6. The motors are operated as in function F4 but in opposite directions.

The driving period, the braking period and the period of no operation may be 40 milliseconds, 200 milliseconds and one second respectively.

In an alternative embodiment of the invention the apparatus is mounted rearwardly of the caravan wheels and the two drive units are arranged to drive the rear wheels W1,W2. In this event, if desired, during manoeuvring of the caravan the towing connection T at the front of the caravan may be supported at a suitable height above the ground by a jockey wheel. In this event the effectiveness of the drive units is enhanced by lifting the towing connection to such a height that the weight of the caravan is concentrated at the rear wheels, thereby reducing the weight on the front wheels which has the effect of lowering the frictional contact of these wheels with the ground.

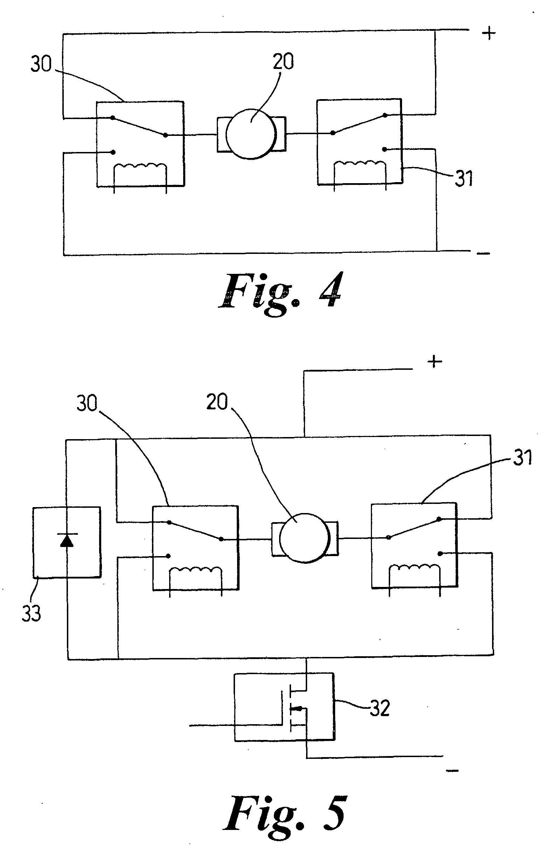

FIGURE 4 shows an electrical circuit suitable for controlling each drive motor 20. The motor 20 is a permanent magnet DC motor connected to two single pole changeover relays 30,31.

When relay 30 is energised and relay 31 is de-energised, the motor is connected to a battery represented by the plus and minus signs in the drawing. When relay 30 is de-energised and relay 31 is energised, the motor is connected to the opposite polarity of the battery, causing the motor to operate in the reverse direction.

When neither relay 30 nor relay 31 is energised, the motor is effectively short circuited. If the motor is short circuited whilst rotating, a current is generated by the motor which causes electro-magnetic braking.

FIGURE 5 shows the addition of a transistor 32 and a flyback diode 33 to the circuit. The transistor is driven from the control electronics with an oscillating signal of several kilohertz and variable duty cycle to provide variable speed control of the motor.

## Claims

1. Apparatus for moving a trailer, the apparatus comprising a pair of drive units (10, 11) which are mountable on a trailer having at least one offside wheel and one nearside wheel, the drive units (10, 11) are
drivingly connectible to the respective wheels of the trailer, the drive units (10, 11) being reversible and
operable in different modes for moving the trailer,
wherein a control system forcontrollingthe operation of the drive units is provided,
**characterized in that** the control system itself controls the supply and interruption of electrical pulses to the drive units (10,11) to cause any selected one of the drive units (10, 11) to operate in steps interrupted by periods of braking or/and no operation of the respective drive unit (10, 11) or/and in increments of different speeds, and **in that** the control system is operable to cause any selected one of the drive units (10, 11) to operate in steps interrupted by periods of braking of said drive unit, and **in that** the drive units (10,11) are provided with electric motors (20), the control system being adapted to control the supply of electricity to the motors, and **in that** the control system is adapted to cause braking of each drive unit (10,11) electro-magnetically by short circuiting the drive motor (20) or by placing a load resistor in circuit with the motor or by applying a reverse voltage to the motor, or mechanically using an automatically engageable mechanical brake.

2. Apparatus as claimed in Claim 1 in which the control system is operable so that each period of braking is followed by a period of no operation of the drive unit.

3. Apparatus as claimed in Claim 1 or 2 in which the control system is operable so that the periods of no operation or/and braking of each drive unit (10,11) and the periods during which the unit is operated to impart drive to the associatedwheel vary in duration.

4. Apparatus as claimed in Claim 3 in which the driving and braking periods are shorter than the period of no operation.

5. Apparatus as claimed in Claim 1 in which the control system is operable so that the selected drive unit (10,11) is operable in increments of different speeds, the increments of a higher speed varying in duration compared with the increments of a lower speed.

6. Apparatus as claimed in any one of the preceding claims in which the control system is operable to cause the drive units (10,11) to operate at different speeds.

7. Apparatus as claimed in Claim 6 in which the control system is operable to cause the selected drive unit (10,11) to turn its associated wheel more slowly than the wheel or wheels at the other side of the trailer.

8. Apparatus as claimed in Claim 1 in which the control system is adapted to cause the drive units (10,11) to operate in increments of different speeds by supplying to the motors (20) electrical pulses of different durations.

9. Apparatus as claimed in any one of the preceding claims in which the drive units (10,11) comprise initially separate units which are adapted to be fitted to a trailer and which incorporate individual drive motors (20) having friction rollers (22) movable into and out of driving contact with the wheels.

10. Apparatus as claimed in Claim 9 which is fitted to a trailer having two pairs of offside and nearside wheels, the apparatus having two drive units (10,11) associated respectively with either the front wheels or the rear wheels.

## Patentansprüche

1. Vorrichtung zum Bewegen eines Anhängers, wobei die Vorrichtung ein Paar Antriebseinheiten (10, 11) enthält, die an einem Anhänger montiert werden können, der wenigstens ein fahrerseitiges Rad und ein beifahrerseitiges Rad besitzt, wobei die Antriebseinheiten (10, 11) mit den jeweiligen Rädern des Anhängers antriebstechnisch verbunden werden können, wobei die Antriebseinheiten (10, 11) umkehrbar sind und in verschiedenen Betriebsarten betreibbar sind, um den Anhänger zu bewegen, wobei ein Steuersystem zum Steuern des Betriebs der Antriebseinheiten vorgesehen ist,
**dadurch gekennzeichnet, dass** das Steuersystem selbst die Zufuhr und die Unterbrechung elektrischer Impulse zu den Antriebseinheiten (10, 11) steuert, um irgendeine ausgewählte der Antriebseinheiten (10, 11) dazu zu veranlassen, in Schritten, die durch Bremsperioden und/oder betriebslosen Perioden der jeweiligen Antriebseinheit (10, 11) unterbrochen sind, und/oder in Inkrementen unterschiedlicher Drehzahlen zu arbeiten, und dass das Steuersystem betreibbar ist, um irgendeine ausgewählte der Antriebseinheiten (10, 11) dazu zu veranlassen, in Schritten, die durch Bremsperioden der Antriebseinheit unterbrochen sind, zu arbeiten, und dass die Antriebseinheiten (10, 11) mit Elektromotoren (20) versehen sind, wobei das Steuersystem dazu ausgelegt ist, die Zufuhr von Elektrizität zu den Motoren zu steuern, und dass das Steuersystem dazu ausgelegt ist, ein Bremsen jeder Antriebseinheit (10, 11) elektromagnetisch durch Kurzschließen des Antriebsmotors (20) oder durch Anordnen eines Lastwiderstands in der Schaltung mit dem Motor oder durch Anlegen einer Gegenspannung an den Motor oder mechanisch unter Verwendung einer automatisch einrückbaren mechanischen Bremse zu veranlassen.

2. Vorrichtung nach Anspruch 1, wobei das Steuersystem betreibbar ist, derart, dass jeder Bremsperiode eine betriebslose Periode der Antriebseinheit folgt.

3. Vorrichtung nach Anspruch 1 oder 2, wobei das Steuersystem so betreibbar ist, dass die betriebslosen und/oder Bremsperioden jeder Antriebseinheit (10, 11) und die Perioden, während derer die Einheit betrieben wird, um das zugeordnete Rad mit einem Antrieb zu beaufschlagen, in ihrer Dauer variieren.

4. Vorrichtung nach Anspruch 3, wobei die Antriebs- und Bremsperioden kürzer sind als die betriebslose Periode.

5. Vorrichtung nach Anspruch 1, wobei das Steuersystem betreibbar ist, derart, dass die ausgewählte Antriebseinheit (10, 11) in Inkrementen unterschiedlicher Drehzahlen betreibbar ist, wobei die Inkremente einer höheren Drehzahl in ihrer Dauer im Vergleich zu den Inkrementen einer niedrigeren Drehzahl variieren.

6. Vorrichtung nach einem der vorhergehenden Ansprüche, wobei das Steuersystem betreibbar ist, um die Antriebseinheiten (10, 11) dazu zu veranlassen, bei unterschiedlichen Drehzahlen zu arbeiten.

7. Vorrichtung nach Anspruch 6, wobei das Steuersystem betreibbar ist, um die ausgewählte Antriebseinheit (10, 11) dazu zu veranlassen, ihr zugeordnetes Rad langsamer als das Rad oder die Räder auf der anderen Seite des Anhängers zu drehen.

8. Vorrichtung nach Anspruch 1, wobei das Steuersystem dazu ausgelegt ist, die Antriebseinheiten (10, 11) dazu zu veranlassen, in Inkrementen unterschiedlicher Drehzahlen zu arbeiten, indem den Motoren (20) elektrische Impulse mit unterschiedlichen Dauern zugeführt werden.

9. Vorrichtung nach einem der vorhergehenden Ansprüche, wobei die Antriebseinheiten (10, 11) anfangs getrennte Einheiten enthalten, die dazu ausgelegt sind, an einem Anhänger angebracht zu werden, und einzelne Antriebsmotoren (20) mit Reibrollen (22), die in einen und aus einem Antriebskontakt mit den Rädern bewegt werden können, enthalten.

10. Vorrichtung nach Anspruch 9, die an einem Anhänger angebracht ist, der zwei Paare fahrerseitiger und beifahrerseitiger Räder besitzt, wobei die Vorrichtung zwei Antriebseinheiten (10, 11) besitzt, die den Vorderrädern bzw. den Hinterrädern zugeordnet sind.

## Revendications

1. Dispositif pour déplacer une remorque, le dispositif comprenant deux unités d'entraînement (10, 11) qui sont aptes à être montées sur une remorque comportant au moins une roue droite et une roue gauche, les unités d'entraînement (10, 11) sont aptes à être reliées dans une relation d'entraînement aux roues respectives de la remorque, étant précisé que lesdites unités d'entraînement (10, 11) sont réversibles et aptes à fonctionner dans différents modes pour déplacer la remorque, un système de commande pour commander le fonctionnement des unités d'entraînement étant prévu,
**caractérisé en ce que** le système de commande lui-même commande l'alimentation des unités d'entraînement (10, 11) en impulsions électriques et l'interruption de celles-ci afin d'amener l'unité d'entraînement (10, 11) sélectionnée à fonctionner par phases interrompues par des périodes de freinage ou/et de non fonctionnement de l'unité d'entraînement respective (10, 11) ou/et par incréments de différentes vitesses, et **en ce que** le système de commande est apte à fonctionner pour amener l'unité d'entraînement (10, 11) sélectionnée à fonctionner par phases interrompues par des périodes de freinage de ladite unité d'entraînement, et **en ce que** les unités d'entraînement (10, 11) sont pourvues de moteurs électriques (20), le système de commande étant apte à commander l'alimentation des moteurs en électricité, et **en ce que** le système de commande est apte à provoquer le freinage de chaque unité d'entraînement (10, 11) par voie électromagnétique en court-circuitant le moteur d'entraînement (20) ou en mettant une résistance de charge en circuit avec le moteur ou en appliquant une tension inverse au moteur, ou en utilisant mécaniquement un frein mécanique apte à activé automatiquement.

2. Dispositif tel que revendiqué dans la revendication 1, dans lequel le système de commande est apte à fonctionner de telle sorte que chaque période de freinage soit suivie par une période de non fonctionnement de l'unité d'entraînement.

3. Dispositif tel que revendiqué dans la revendication 1 ou 2, dans lequel le système de commande est apte à fonctionner de telle sorte que les périodes de non fonctionnement ou/et de freinage de chaque unité d'entraînement (10, 11) et les périodes pendant lesquelles l'unité fonctionne pour communiquer un entraînement à la roue associée varient en durée.

4. Dispositif tel que revendiqué dans la revendication 3, dans lequel les périodes d'entraînement et de freinage sont plus courtes que la période de non fonctionnement.

5. Dispositif tel que revendiqué dans la revendication 1, dans lequel le système de commande est apte à fonctionner de telle sorte que l'unité d'entraînement (10, 11) sélectionnée soit apte à fonctionner par incréments de différentes vitesses, les incréments d'une vitesse plus élevée variant en durée comparés aux incréments d'une vitesse plus faible.

6. Dispositif tel que revendiqué dans l'une quelconque des revendications précédentes, dans lequel le système de commande est apte à fonctionner pour amener les unités d'entraînement (10, 11) à fonctionner à des vitesses différentes.

7. Dispositif tel que revendiqué dans la revendication 6, dans lequel le système de commande est apte à fonctionner pour amener l'unité d'entraînement (10, 11) sélectionnée à tourner sa roue associée plus lentement que la ou les roues de l'autre côté de la remorque.

8. Dispositif tel que revendiqué dans la revendication 1, dans lequel le système de commande est apte à amener les unités d'entraînement (10, 11) à fonctionner par incréments de différentes vitesses en alimentant les moteurs (20) en impulsions électriques de différentes durées.

9. Dispositif tel que revendiqué dans l'une quelconque des revendications précédentes, dans lequel les unités d'entraînement (10, 11) comprennent des unités initialement séparées qui sont aptes à être installées sur une remorque et qui comportent des moteurs d'entraînement individuels (20) pourvus de galets de friction (22) aptes à établir et à supprimer un contact d'entraînement avec les roues.

10. Dispositif tel que revendiqué dans la revendication 9, qui est installé sur une remorque comportant deux paires de roues gauches et droites, le dispositif ayant deux unités d'entraînement (10, 11) associées respectivement aux roues avant ou aux roues arrière.
